# EUROPEAN PATENT SPECIFICATION

(11) **EP 3 466 685 B1**
(45) Date of publication and mention of the grant of the patent: **17.11.2021**
(21) Application number: 18020483.6
(22) Date of filing: 03.10.2018
(51) Int. Cl.: B32B 27/32, B32B 27/08, B32B 27/30, B32B 7/06, B32B 27/34, B32B 27/36

(54) **MULTILAYER FILM AND A METHOD FOR PRODUCING MULTILAYER FILM**
MEHRLAGIGER FILM UND VERFAHREN ZUR HERSTELLUNG DES MEHRLAGIGEN FILMS
FILM MULTICOUCHE ET PROCÉDÉ DE PRODUCTION DE FILM MULTICOUCHE

(30) Priority: 04.10.2017 PL 42306917
(43) Date of publication of application: 10.04.2019
(73) Proprietor: ERGIS S. A., 00-349 Warszawa (PL)
(72) Inventor: KNOR, Marek, 05-800 Pruszkow (PL); NOWICKI, Tadeusz, 01-625 Warszawa (PL); KEDZIERSKI, Grzegorz, 02-804 Warszawa (PL)
(74) Representative: Radlowski, Jakub

(56) References cited:
- WO-A1-94/09392
- WO-A1-2010/015402
- WO-A1-2011/146288
- WO-A1-2017/063087

## Description

The invention relates to a multilayer film used for temporary protection of the surface and a method for producing the multilayer film.

The films for temporary protection of the surface are widely used both to protect objects undergoing production processes in the industry as well as consumer goods in their finished form. They protect the surface of objects against mechanical damage and dirt in particular in the production process and in transport. These are, among others, films protecting semi-finished products such as metal surfaces, either coated or uncoated (different types of sheet metals, profiles), plastic surfaces (polymethylmethacrylate plates, polycarbonate plates, plastic profiles), glass surfaces (panes, mirrors) and finished products such as household products, car bodywork and interior, electronic equipment, etc.

These films must provide good surface protection against mechanical factors and must be easy to remove. The proper surface protection may be obtained by using a film of appropriate thickness made of appropriate material; however, in this case a higher level of protection entails mainly the need to apply either a thicker film or use better materials which leads to an increase in production costs. The ease of removal of the film from the product protected is also an important parameter and it is necessary to ensure an appropriate balance between the ease of removal of the film and its adhesive properties which shall be strong enough to ensure that the film cannot come unstuck easily during the intended period of protection. The delamination is affected by the adhesion force applied by the adhesive layer as well as the mechanical strength of the film itself. If the adhesion force is too strong, the film may break and become fragmented when being removed from the surface which considerably hinders its removal. To prevent it, efforts are made to increase the mechanical strength of the film and in particular its breaking strength without increasing the thickness and without the need to use better raw materials which make the product more expensive.

There are known solutions where blocks of thin layers are used to improve film properties. One of them involves a heat-shrinkable film revealed by American patent specification No. US8080310(B2) where there is at least one bulk layer and at least one section of microlayers. This film structure demonstrates better heat-shrinkable properties compared to traditional heat-shrinkable films.

International patent application published as WO 94/09392 referring all-polymeric cold mirror reveals a multilayer film where two polypropylene outer layers protect a block of alternating layers of two different polymeric materials. These polymeric materials in the block can be e.g. polystyrene, polyethylene, polycarbonate, polymethyl methacrylate or other elastomers. The block of layers may consist of 200 or more thin layers. The outer polypropylene layers are anti-adhesive layers providing surface protection. Inner layers are intended to reflect visible light of different wavelengths e.g. 380-680 nm, 680-2000 nm and others.

In another patent specification No. US 8129031 (B2) the block of microlayers with the thickness of a single layer ranging from 0.01 to 10 microns is used to improve film properties in sterilization conditions with the use of autoclaves. In this case two different raw materials are used which appear alternately in layers and one of them is temperature resistance while the other is elastic. There might be from 10 to as much as 2000 alternate layers in the film structure. The layers may be made of polypropylene elastomers, low or ultra-low density polyethylenes, ethylene copolymers with carboxylic acid or carboxylic acid ester or the combination of the above-mentioned components.

In another American patent No. US8097346(B2) the film is a structure comprised of alternate microlayers of which some contain thermally resistant polymer whereas the rest contains a barrier polymer and is used as a barrier film for sterilization at higher temperature. The thermally resistant layer may contain polypropylene homopolymers or copolymers, high density polyethylenes, cyclic olefin polymers, polypropylenes or high density polyethylenes modified by maleic anhydride or the combination of the above-mentioned

The adhesive layer of the film for temporary protection of the surface is usually applied by coating (US 5895714 A) or in the co-extrusion process (EP1767341).

There also exist packaging films with a multilayer structure. For example the international application published under number WO2016153833 specifies a multilayer polymer film with a core layer made of plastic with a significant proportion of polypropylenes, intermediate layers composed mainly of the polyethylene plastic and outer layers.

US2002177669 discloses a protective adhesive film comprising a support layer and an adhesive layer. In one particular embodiment, on the other side of the support layer, i.e., on the side which is not in contact with the adhesive layer, the protective adhesive film comprises a protective layer which is advantageously non-stick. The examples show protective films comprising support layers having a two-layer structure, each layer including a polyethylene composition.

Numerous attempts are made to solve the technical problem which in this case is to ensure appropriate strength of the surface protection film which due to its function must have protective properties while at the same time to reduce the thickness of this film and (optimally) use commonly used plastics for multilayer film production including mainly polyethylene and/or polypropylene copolymers, without the need to use more expensive raw materials.

The present invention relates to the film for temporary protection of the surface with greater mechanical strength which contains at least one block of alternately placed thin layers. The outer layer is made of a sticky (adhesive) layer, whereas the opposite outer layer is made of an anti-adhesive layer which at the same times acts as a slip layer with increased mechanical strength. There is from 10 to 100 thin layers (microlayers) in the block of layers. The raw material, of which the microlayers in the block are made, is high density polyethylene (HDPE), low density polyethylene (LDPE), linear low density polyethylene (LLDPE), ultra-low density polyethylene (ULDPE), polypropylene (PP), polyamide (PA) or copolymers, including block copolymers or mixtures of these raw materials. It is preferable when the raw materials in individual layers have different mechanical and strength properties, e.g. polyethylene and polypropylene or elastomer and plastomer.

There may be more than one block of microlayers in the film. The block or blocks of thin layers account in total for 15% to 80% of the thickness of the entire film. The microlayers may be made of the same raw material or of different raw materials placed alternately in the film structure and their thickness ranges from 0.05 to 1 µm. Preferably there are two blocks of microlayers in the film separated by at least one 1-50 µm thick intermediate layer or three blocks of which one is the film core and on its sides the remaining two blocks are situated, each of which is separated from the core by at least one 1-25 µm thick intermediate layer. Preferably in the film there are also 1-30 µm thick intermediate layers and they are situated between the block or blocks of microlayers and outer layers. The outer layers of the film are structured in such a manner that one of the 1-20 µm thick outer layers forms an adhesive layer and the opposite 1-20 µm thick outer layer forms an anti-adhesive layer.

The outer adhesive (sticky) layer may contain thermoplastic elastomers such as acrylic copolymers, polypropylene copolymers, ethylene vinyl copolymers (EVA), styrene and isoprene block copolymers (SIS) as well as hydrogenated copolymers (SEPS), styrene and butadiene copolymers (SBS) as well as hydrogenated styrene, ethylene, butene and styrene copolymers (SEBS), styrene, ethylene and propylene copolymers (SEP), cycloaliphatic copolymers or mixtures of these elastomers or other elastomers applied for example in the form of aqueous dispersion such as rubber elastomers, acrylic elastomers including those cross-linked chemically or by UV radiation or their mixtures as well as the mixtures of elastomers with polyethylenes or polypropylenes. The adhesive layer is 1-20 µm thick and may be applied during film production in the co-extrusion process or in a separate process, e.g. coating.

Opposite to the adhesive surface layer there is the anti-adhesive or anti-scratch layer which makes it easier to unwrap the film from the roll and also reduces the risk of damaging the film on the protected surface. It may contain thermoplastic polymers with increased scratch resistance or polymers with reduced affinity for the adhesive layer such as HDPE, LDPE, LLDPE, PP, PA, polyesters as well as their copolymers, including block copolymers or their mixtures and substances reducing surface friction such as fluorine substances.

Preferably in the film there are 2 or 3 blocks of microlayers extruded and separated by at least one intermediate layer. In this case the intermediate layer may contain high density polyethylene (HDPE), low density polyethylene (LDPE), linear low density polyethylene (LLDPE), ultra-low density polyethylene (ULDPE), polypropylene (PP), polyamide (PA) as well as copolymers, including block copolymers or mixtures of these raw materials.

Preferably the blocks of thin layers in the film are separated from the surface layers with the use of at least one 1-30 µm thick intermediate layer. The intermediate layer in this case may contain high density polyethylene (HDPE), low density polyethylene (LDPE), linear low density polyethylene (LLDPE), ultra-low density polyethylene (ULDPE), polypropylene (PP) as well as copolymers, including block copolymers or mixtures of these raw materials.

In the method for producing according to this solution the multilayer film is extruded with the use of the revealed *"cast"* method using slit heads and the structure of film layers is shaped in such a manner that at least one block of thin layers is extruded which consists from 10-100 microlayers, where the block of thin layers accounts for 15 to 80% of the total thickness of the film and in addition at least outer layers of the film are extruded, each of which is 1-20 µm thick and one of the outer layers is an adhesive (sticky) layer, whereas the other one is an anti-adhesive layer. The microlayers in the block are extruded from the same raw material or from different raw materials chosen from the following plastics: high density polyethylene (HDPE), low density polyethylene (LDPE), linear low density polyethylene (LLDPE), ultra-low density polyethylene (ULDPE), polypropylene (PP), polyamide (PA) or copolymers (including block copolymers) or mixtures of these raw materials. If the block of microlayers is extruded from the same raw material, the plastic is heated to the temperature ranging from 230 to 300° C and plasticized in one or more extruders and then fed to the multiplying system where the block or blocks of microlayers are formed and streams from other extruders forming other layers are combined. The stream of individual, parallel layers shaped in the appropriate sequence and then combined is forced through to the head slit where the combined, parallel layers form a wide, thin strip which after leaving the head is stretched and then solidifies and crystalizes when it comes into contact with the rotating cooling cylinder. The temperature of the surface of the cylinder ranges from 10 to 40° C and its rotational speed is selected in such a way that the film becomes 5-100 times thinner as a result of stretching compared to the thickness of the strip leaving the slit head and achieves the set thickness of the finished product. If the microlayers in the block are made alternately from different types of plastic, the multiplying system apart from plasticized streams forming intermediate layers (if any) and surface layers, is fed with two types of plastic from two different extruders and the block microlayers are extruded alternately. In each of the above-mentioned cases the thickness of the extruded microlayers in the block ranges from 0.05 to 1 µm.

The anti-adhesive (anti-scratch) layer is an outer layer which is produced in the co-extrusion process with other layers. This layer is extruded preferably from plastic plasticized in a separate extruder containing thermoplastic polymers with increased scratch resistance or polymers with reduced affinity for the adhesive layer such as HDPE, LDPE, LLDPE, PP, PA, polyesters as well as their copolymers, including block copolymers or their mixtures and substances reducing surface friction such as fluorine substances.

Whereas the adhesive layer may be extruded either together with the film in the co-extrusion process or applied in a separate coating process. If it is extruded in the co-extrusion process, one of the streams of the raw material plasticized in the extruder containing the thermoplastic adhesive substance (usually elastomer) is fed to the system in such a way that it combines with other layers forming the outer layer of the stream consisting of parallel, remaining layers and then the stream of combined layers after being forced through the slit head is stretched and cooled as described above. If the adhesive layer is applied in a separate process then this layer is made in the coating process and the temporarily outer layer obtained in the co-extrusion process is extruded together with other film layers but preferably with the use of other raw materials. It is preferable when if the adhesive layer is applied in the coating process, the temporarily outer layer of the extruded film which afterwards undergoes the coating process, contains the ethylene vinyl acetate copolymers (EVA), ethylene methyl acrylate copolymer (EMA), ethylene ethyl acrylate copolymer (EEA), ethylene butyl acrylate copolymer (EBA) and other copolymers increasing surface polarity.

In the preferable variant of the described method, if the adhesive layer is obtained in the co-extrusion process, it contains thermoplastic elastomers such as acrylic copolymers, polypropylene copolymers, ethylene vinyl copolymers (EVA); styrene and isoprene block copolymers (SIS) as well as hydrogenated copolymers (SEPS); styrene and butadiene (SBS) copolymers as well as hydrogenated copolymers; styrene, ethylene, butene and styrene copolymers (SEBS); styrene, ethylene and propylene copolymers (SEP); cycloaliphatic copolymers or mixtures of these elastomers.

If the sticky (adhesive) layer is applied in a separate phase, the film produced initially according to the method described above undergoes in turn the process of coating with the sticky layer. To this end the outer surface of the film opposite the one on which the anti-adhesive layer is located, is activated by crown discharge and this surface is coated with the sticky substance in the form of, for example, acrylic aqueous dispersion at glass transition temperature of dry matter -38° C. Next, water is evaporated from the applied adhesive layer in the drying tunnel and adhesive is obtained in the amount of 1-20 g/m². The adhesive layer prepared this way may contain rubber elastomers, acrylic elastomer including those cross-linked chemically or by UV radiation (UV) or other elastomers and their mixtures. It is preferable when the sticky layer is cross-linked chemically and a cross-linking agent is added to the aqueous dispersion. In another variant of the method according to the invention the sticky layer may be cross-linked, among others, by UV radiation when the film after water evaporation undergoes UV radiation. Alternatively, the adhesive layer may be applied by coating as described above using instead of the aqueous dispersion the sticky substance solvent solution (usually elastomer).

The revealed method for producing the film may be also executed by the applying the *blown* process which involves extrusion of the cylindrical sleeve which after solidification and crystallization of the film is cut and forms a flat film strip. To this end the raw materials comprising individual layers described above are heated to the temperature of 180-260° C and plasticized in the extruders and then the streams are combined in an appropriate sequence in a multilayer cylindrical head except that instead of the elongated strip formed in the slit head (in the *"cast"* method described earlier) the film is formed with the use of the multilayer cylindrical head in the form of a sleeve which then by pumping air inside the sleeve undergoes a biaxial stretching and cooling at the same time which leads to crystallization and solidification of the raw materials in individual layers and a 1.5-3.5 fold increase in the diameter of the sleeve compared to the diameter of the sleeve extruding head die. The cooling is performed also with the use of air streams outside the formed sleeve. The film which is a stretched sleeve is folded and cut after cooling, and then wrapped on a roll. Similarly as in the case of the *"cast"* method the sticky layer may be obtained in the co-extrusion process or in a separate coating process. In the case of co-extrusion of the adhesive layer the film is produced in such a way that the inner layer of the sleeve is an anti-adhesive layer whereas the outer layer of the sleeve is a sticky layer. The block (alternatively blocks) of thin layers in the sequence described above as well as intermediate layers are extruded in such a way that they are located between the inner layer of the sleeve and the outer layer of the sleeve forming the structure described above.

If the sticky layer is applied in a separate coating process, the sleeve layer onto which the adhesive layer is then applied is formed preferably with the use of raw materials containing as in the case of the *"cast"* method ethylene vinyl acetate copolymers (EVA), ethylene methyl acrylate copolymer (EMA), ethylene ethyl acrylate copolymer (EEA), ethylene butyl acrylate copolymer (EBA) and other copolymers increasing surface polarity. Next the film undergoes coating with an adhesive layer as described above.

Unexpectedly it turned out that with such a structure of the surface protection film or with the use of the method for producing it as described above, a product with very good strength properties is obtained which guarantee higher level of surface protection and easy removal of the film from the protected surface while at the same time maintaining a high enough level of adhesion index and this result was achieved only due to proper form of the film structure, without the need for using more expensive raw materials.

### Example 1

The example of the film according to the invention is the film consisting of 32 layers, including one adhesive layer. The film core consists of the 15 µm thick block and it is made of 29 layers placed alternately out of which 15 layers are composed of low density polyethylene with density of 0.912 g/cm³ and mass flow rate of 0.9 g/10 min (190° C; 2.16 kg), whereas the remaining 14 microlayers consist of 80% of propylene copolymer with density of 0.89 g/cm³ mass flow rate of 5 g/10min (230° C, 2.16 kg) mixed with 20% block propylene copolymer with ethylene with ethylene content of 16%, density of 0.858 g/cm³ and mass flow rate of 3 g/10 min (230° C, 2.16 kg). On outer sides of the block of 29 thin layers there are layers, each of which is 10 µm thick, composed of 90% of low density polyethylene with density of 0.912 g/cm³ and mass flow rate of 0.9 g/10 min (190° C, 2.16 kg) mixed with 10% of polyethylene with mass flow rate of 0.25 g/10 min (190° C, 2.16 kg) and density of 0.940 g/cm³. The film has also a 5 µm thick adhesive layer made of ethylene vinyl acetate copolymer with the vinyl acetate content of 26% and mass flow rate of 2 g/10 min and density of 0.949 g/cm³ (190° C, 2.16 kg). The raw materials for film production are combined in an appropriate sequence after being plasticized in extruders first.

### Example 2

In another example of execution of the invention the film consists of 28 layers, including one adhesive layer applied in a separate phase by coating. The film structure consists of the core comprising of 2 blocks of microlayers and each block is 8 µm thick and made of 11 alternate microlayers with the following composition: 5 microlayers in each of the blocks are composed of high density polyethylene with density of 0.960 g/cm³ and mass flow rate of 4 g/10 min (190° C, 2.16 kg), whereas the remaining 6 microlayers are composed of linear low density polyethylene with density of 0.918 g/cm³, mass flow rate of 4.5 g/10 min (190° C, 2.16 kg). Both blocks of thin layers described above are separated from each other with a 5 µm thick intermediate layer composed of block copolymer of propylene with ethylene with ethylene content of 16% and density of 0.858 g/cm³ and mass flow rate of 3 g/10 min (230° C, 2.16 kg). One of the outer layers is a 5 µm thick anti-adhesive layer made of low density polyethylene with mass flow rate of 4.4 g/10 min (190° C, 2.16 kg) and density of 0.936 g/cm³. Symmetrically, opposite the block there is a 5 µm layer (forming the layer onto which an adhesive layer is still applied) consisting of linear low density polyethylene with density of 0.918 g/cm³ and mass flow rate of 4.5 g/10 min (190° C, 2.16 kg) mixed with 10% of ethylene methyl acrylate copolymer (EMA) with methyl acrylate content of 25% and density of 0.94 g/cm³ and mass flow rate of 0.5 g/10 min (190° C, 2.16 kg). Between the blocks of thin layers and the described above: anti-adhesive outer layer and the layer which is coated directly with an adhesive outer layer, there are two intermediate layers (one on each side of the core) each of which is 3 µm thick. These intermediate layers consist of linear low density polyethylene with density of 0.918 g/cm³ and mass flow rate of 2.8 g/10 min (190° C, 2.16 kg). The layer opposite the anti-adhesive layer is coated additionally with a 5 µm thick sticky layer consisting of acrylic elastomer at glass transition temperature of -38° C.

### Example 3

In another example of execution of the invention the film is produced according to example 2 except that 6 microlayers in each of the blocks are made of the mixture of linear low density polyethylene with density of 0.918 g/cm³, with mass flow rate of 4.5 g/10 min (190° C, 2.16 kg) mixed with 50% of ethylene methyl acrylate copolymer with mass flow rate of 2 g/10 min (190° C, 2.16 kg) containing 24% of methyl acrylate.

### Example 4

In another example of execution of the invention the film is produced according to example 3 except that 5 microlayers in each of the blocks are made of 6/66 polyamide with density of 1.12 g/cm³ and melting point of 196° C.

### Example 5

In the example of execution of the method according to the invention the film is produced in the form of 26 layers, including one sticky layer. The film is produced in two phases. During the first phase a 25-layer film is produced which consists of a core layer, two blocks of thin layers adjacent to the core and outer layers. The 8 µm thick core layer is made of 70% of low density polyethylene with density of 0.918 g/cm³ and mass flow rate of 2.8 g/10 min (190° C, 2.16 kg), mixed with 30% of low density polyethylene with density of 0.927 g/cm³ and mass flow rate of 3.5 g/10 min (190° C, 2.16 kg). This mixture is heated and plasticized in the first extruder and then forced through to the multiplying system where it is combined with other layers. Next to the core layer on each side of its sides there are blocks of 11 thin layers extruded and each microlayer is 0.5 µm thick. 5 out of the microlayers in each block consist of low density polyethylene with density of 0.918 g/cm³ and mass flow rate of 2.8 g/10 min (190° C, 2.16 kg) which is heated in the second extruder and fed through the multiplying system to the slit head. At the same time the remaining 6 microlayers in each of the blocks are extruded from the plastic composed of polypropylene copolymer with density of 0.905 g/cm³ and mass flow rate of 8g/10 min (230° C, 2.16 kg), mixed with polypropylene copolymer with density of 0.863 g/cm³ mass flow rate of 3 g/10 min (230° C, 2.16 kg), and the mixture is heated in the third extruder and fed through the multiplying system to the slit head. Thin layers are combined alternately in such a manner that single polypropylene layers are separated from each other by single polyethylene layers. Such a stream of layers is combined with the outer layer made of the plastic heated in the fourth extruder, composed of low density polyethylene with density of 0.927 g/cm³ and mass flow rate of 3.5 g/10 min (190° C, 2.16 kg) mixed with an additive of 20% of high density polyethylene with density of 0.960 g/cm³ and mass flow rate of 4 g/10 min (190° C, 2.16 kg). The second (opposite) outer layer is extruded from the plastic from the fifth extruder which is low density polyethylene with density of 0.935 g/cm³ and mass flow rate of 2.8 g/10 min (190° C, 2.16 kg), mixed with an additive of 20% of low density polyethylene with density of 0.918 g/cm³ and mass flow rate of 2.8 g/10 min (190° C, 2.16 kg). The streams of raw materials of individual layers are plasticized with the use of the above-mentioned extruders and combined in the described sequence and extruded by the slit head onto the rotating, cooled cylinder on which the plasticized strip of the material solidifies and forms the film (*"cast"* method). Next the film produced this way undergoes the process of coating with the sticky layer by application onto the outer surface from the fifth extruder which after prior activation of the surface by crown discharge, acrylic aqueous dispersion at glass transition temperature of dry matter of - 38° C and its evaporation in the drying tunnel, as a result of which the adhesive in the amount of 5 g/m² is obtained.

### Example 6

In another example of execution of the method according to the invention the film is produced in the same manner as in example 5 and the adhesive layer is obtained together with the film in the co-extrusion process. This layer is extruded in a separate extruder, next it is fed to the multiplying system and after being combined with the stream of other layers, it is forced through to the slit head. This layer consist of 70% of block copolymer of propylene with ethylene with ethylene content of 16%, density of 0.863 g/cm³ and mass flow rate of 3 g/10 min (230° C, 2.16 kg) mixed with other block copolymer of propylene with ethylene with ethylene content of 11%, density of 0.873 g/cm³ and mass flow rate of 7 g/10 min (230° C, 2.16 kg).

### Example 7

In another example of execution the film is produced in 2 phases. During the first phase the 32-layer film is produced according to the structure presented in example 1 except that the outer layer which in example 1 is the adhesive layer, is extruded from the raw material being the mixture of low density polyethylene with density of 0.912 g/cm³ and mass flow rate of 0.9 g/10 min (190° C, 2.16 kg) mixed with 20% of ethylene vinyl acetate copolymer with vinyl acetate content of 18% and mass flow rate of 1.7 g/10 min (190° C, 2.16 kg). The raw materials forming individual layers described in example 1 are plasticized in such a manner that in extruder 1 and 2 the raw materials which form the core are plasticized, in extruder 3 the raw materials which form one layer adjacent to the core are plasticized, in extruder 4 the raw materials which form the opposite layer adjacent to the core are plasticized and in extruder 5 the raw materials which form an additional layer situated on one of the layers adjacent to the core are plasticized. After being plasticized the raw materials are forced through to the head with a cylindrical die where the raw materials streams are combined in the appropriate sequence and extruded through the die forming a cylindrical sleeve which is then stretched with the use of the air pressed inside the sleeve and at the same time it is cooled by the air stream outside obtaining a 2.5 fold increase in the diameter of the sleeve of the cooled and solidified film compared to the die diameter. The sleeve is extruded in such a way that the outer layer of the sleeve forms the layer containing ethylene vinyl acetate copolymer. Next the adhesive layer is applied in the coating process by application onto the film surface being the outer surface of the sleeve, after prior activation of this surface by crown discharge, acrylic aqueous dispersion at glass transition temperature of dry matter of -38° C and its evaporation in the drying tunnel, and the adhesive in the amount of 5 g/m² is obtained.

The film produced according to the invention and the application of the described method for producing solves the technical problem signalled at the beginning, i.e. with proper form of the film structure, including the thickness and the ratio of individual layers of the film, a product is obtained which is made of typical plastic from which protection films are produced (i.e. without the need of using expensive additives which improve the film strength). At the same time this product has very good resistance to damage and good stretching properties.

The film according to the invention may be used to protect any surface, coated or uncoated, including metal, plastic, glass and other surfaces.

## Claims

1. Surface protection film containing 50-99% of copolymers of ethylene, copolymer of propylene or a mixture thereof, consisting of layers where at least one layer is a block of 10 - 100 thin layers and this block constitutes 15% to 80% of a total thickness of the film, and the thickness of each of the microlayers in the block ranges from 0.05 to 1.00 µm and the thin layers are made of the same plastic or 2 different types of plastic located alternately where the plastic forming said block of thin layers is high density polyethylene (HDPE) or low density polyethylene (LDPE) or linear low density polyethylene (LLDPE) or ultra-low density polyethylene (ULDPE) or polypropylene (PP) or polyamide (PA) or copolymers including block copolymers or mixtures of these raw materials and one of the outer layers of the film is a 1-20 µm thick adhesive layer, and the opposite outer layer of the film is a 1-20 µm thick anti-adhesive layer.

2. The film according to claim 1 **characterised in that** it contains 2 blocks of microlayers separated by at least one 1-50 µm thick layer.

3. The film according to one of the above-mentioned claims **characterised in that** the adhesive layer contains one of thermoplastic elastomers such as acrylic copolymers, polypropylene copolymers, ethylene vinyl copolymers (EVA), styrene and isoprene block copolymers (SIS) as well as hydrogenated copolymers (SEPS), styrene and butadiene copolymers (SBS) as well as hydrogenated styrene, ethylene, butene and styrene copolymers (SEBS), styrene, ethylene and propylene copolymers (SEP), cycloaliphatic copolymers or mixtures of these elastomers or other elastomers applied by aqueous dispersion such as rubber elastomers, acrylic elastomers including those cross-linked chemically or by UV radiation or their mixture as well as the mixture of elastomers with polyethylenes or polypropylenes.

4. The film according to one of the above-mentioned claims **characterised in that** the anti-adhesive layer contains one of polymers such as HDPE, LDPE, LLDPE, PP, PA, polyesters as well as their copolymers, including block copolymers or their mixtures or fluorine substances reducing surface friction.

5. The film according to one of the above-mentioned claims **characterised in that** between the block of thin layers and the outer layer there is at least one 1-30 µm thick intermediate layer.

6. The film according to one of the above-mentioned claims **characterised in that** the layer located directly under the adhesive layer contains ethylene vinyl acetate copolymers (EVA), ethylene methyl acrylate copolymers (EMA), ethylene ethyl acrylate copolymers (EEA), ethylene butyl acrylate copolymers (EBA) and other copolymers increasing surface polarity.

7. The method for producing surface protection film where the film is produced in a multilayer form from the mixture of polymers containing from 50 to 99% of ethylene copolymers, propylene copolymers or their mixture, with at least 1 block of thin layers, where the structure of layers is shaped by extruding from the plasticized plastic a block of microlayers comprised of 10 - 100 microlayers where there are shaped of 2 different types of plastics extruded alternately and where these plastics constitutes one of the following raw materials: high density polyethylene (HDPE), low density polyethylene (LDPE), linear low density polyethylene (LLDPE), ultra-low density polyethylene (ULDPE), polypropylene (PP), polyamide (PA) or copolymers, including block copolymers or mixtures of these raw materials and the block of thin layers accounting for 15-80% of the film thickness, and each of the microlayer is from 0.05 to 1 µm thick and in addition the block surface is covered with a 1-20 µm thick outer adhesive layer which is, whereas the opposite surface with a 1-20 µm thick anti-adhesive layer.

8. The method for producing the film according to claim 7, **characterised in that** the film is produced from 2 blocks of microlayers, separated by a core layer which is from 1 to 50 µm thick.

9. The method for producing the film according to claims 7-8 **characterised in that** the adhesive layer is produced from thermoplastic elastomers such as acrylic copolymers; polypropylene copolymers; ethylene vinyl copolymers (EVA); styrene and isoprene block copolymers (SIS) as well as hydrogenated copolymers (SEPS); styrene and butadiene (SBS) copolymers as well as hydrogenated copolymers; styrene, ethylene, butene and styrene copolymers (SEBS); styrene, ethylene and propylene copolymers (SEP); cycloaliphatic copolymers or mixtures of these elastomers or elastomers applied by aqueous dispersion such as rubber elastomers, acrylic elastomers including those cross-linked chemically or by UV radiation or their mixture as well as the mixture of elastomers with polyethylenes or polypropylenes.

10. The method for producing the film according to claims 7-9 **characterised in that** the anti-adhesive layer contains one of polymers such as HDPE, LDPE, LLDPE, PP, PA, polyesters as well as their copolymers, including block copolymers or their mixtures or fluorine substances reducing surface friction.

## Patentansprüche

1. Oberflächenschutzfolie, die 50 bis 99 % Ethylencopolymere, Propylencopolymere oder einer Mischung davon enthält, die aus Schichten besteht, wobei mindestens eine Schicht ein Block aus 10 bis 100 dünnen Schichten ist, und dieser Block 15 % bis 80 % einer Gesamtdicke der Folie darstellt, und die Dicke jeder der Mikroschichten in dem Block in dem Bereich von 0,05 bis 1,00 µm liegt, und die dünnen Schichten aus demselben Kunststoff oder 2 unterschiedlichen Arten von Kunststoffen hergestellt sind, die abwechselnd positioniert sind, wobei der Kunststoff, der den Block aus dünnen Schichten bildet, hochdichtes Polyethylen (HDPE) oder niedrigdichtes Polyethylen (LDPE) oder lineares niedrigdichtes Polyethylen (LLDPE) oder ultraniedrigdichtes Polyethylen (ULDPE) oder Polypropylen (PP) oder Polyamid (PA) oder Copolymere einschließlich Blockcopolymere oder Mischungen dieser Rohstoffe ist, und eine der äußeren Schichten der Folie eine 1 bis 20 µm dicke Haftschicht ist, und die entgegengesetzte äußere Schicht der Folie eine 1 bis 20 µm dicke Antihaftschicht ist.

2. Folie nach Anspruch 1, **dadurch gekennzeichnet, dass** sie 2 Blöcke von Mikroschichten enthält, die von mindestens einer 1 bis 50 µm dicken Schicht getrennt sind.

3. Folie nach einem der oben erwähnten Ansprüche, **dadurch gekennzeichnet, dass** die Haftschicht eines der thermoplastischen Elastomere, wie Acryl-Copolymere, Polypropylen-Copolymere, Ethylen-Vinyl-Copolymere (EVA), Styrol- und Isopren-Block-Copolymere (SIS) sowie hydrierte Copolymere (SEPS), Styrol- und Butadien-Copolymere (SBS) sowie hydrierte Styrol-, Ethylen-, Buten- und Styrol-Copolymere (SEBS), Styrol-, Ethylen- und Propylen-Copolymere (SEP), cycloaliphatische Copolymere oder Mischungen dieser Elastomere oder andere durch wässrige Dispersion aufgebrachte Elastomere, wie Kautschuk-Elastomere, Acrylelastomere einschließlich solcher, die chemisch oder durch UV-Strahlung vernetzt sind, oder deren Mischung sowie die Mischung von Elastomeren mit Polyethylenen oder Polypropylenen enthält.

4. Folie nach einem der oben erwähnten Ansprüche, **dadurch gekennzeichnet, dass** die Antihaftschicht eines der Polymere, wie HDPE, LDPE, LLDPE, PP, PA, Polyester sowie deren Copolymere, einschließlich Blockcopolymeren oder deren Mischungen oder Fluorsubstanzen enthält, die Oberflächenreibung verringern.

5. Folie nach einem der oben erwähnten Ansprüche, **dadurch gekennzeichnet, dass** sich zwischen dem Block aus dünnen Schichten und der äußeren Schicht mindestens eine 1 bis 30 µm dicke Zwischenschicht befindet.

6. Folie nach einem der oben erwähnten Ansprüche, **dadurch gekennzeichnet, dass** die direkt unter der Haftschicht positionierte Schicht Ethylen-Vinylacetat-Copolymere (EVA), Ethylen-Methylacrylat-Copolymere (EMA), Ethylen-Ethylacrylat-Copolymere (EEA), Ethylen-Butylacrylat-Copolymere (EBA) und andere Copolymere mit erhöhter Oberflächenpolarität enthält.

7. Verfahren zum Herstellen einer Oberflächenschutzfolie, wobei die Folie in einer mehrschichtigen Form aus der Mischung von Polymeren, die 50 bis 99 % EthylenCopolymere, Propylen-Copolymere oder deren Mischung enthält, mit mindestens 1 Block aus dünnen Schichten hergestellt wird, wobei die Struktur der Schichten durch Extrudieren eines Blocks aus Mikroschichten, der 10 bis 100 Mikroschichten umfasst, aus dem plastifizierten Kunststoff geformt wird, wobei abwechselnd 2 unterschiedliche Kunststofftypen extrudiert werden, und wobei diese Kunststoffe einen der folgenden Rohstoffe bilden: hochdichtes Polyethylen (HDPE), niedrigdichtes Polyethylen (LDPE), lineares niedrigdichtes Polyethylen (LLDPE), ultraniedrigdichtes Polyethylen (ULDPE), Polypropylen (PP), Polyamid (PA) oder Copolymere, einschließlich Blockcopolymeren oder Mischungen dieser Rohstoffe, und der Block aus dünnen Schichten 15 bis 80 % der Foliendicke ausmacht, und jede der Mikroschichten 0,05 bis 1 µm dick ist, und zusätzlich die Blockoberfläche mit einer 1 bis 20 µm dicken äußeren Haftschicht bedeckt ist, während die entgegengesetzte Oberfläche mit einer 1-20 µm dicken Antihaftschicht bedeckt ist.

8. Verfahren zum Herstellen der Folie nach Anspruch 7, **dadurch gekennzeichnet, dass** die Folie aus 2 Blöcken von Mikroschichten hergestellt wird, die durch eine Kernschicht getrennt sind, die 1 bis 50 µm dick ist.

9. Verfahren zum Herstellen der Folie nach den Ansprüchen 7-8, **dadurch gekennzeichnet, dass** die Haftschicht aus thermoplastischen Elastomeren, wie Acryl-Copolymeren, Polypropylen-Copolymeren, Ethylen-Vinyl-Copolymeren (EVA), Styrol-Isopren-BlockCopolymeren (SIS) sowie hydrierten Copolymeren (SEPS), Styrol-Butadien (SBS)-Copolymeren sowie hydrierten Copolymeren; Styrol-, Ethylen-, Buten-, und Styrol-Copolymeren (SEBS), Styrol-, Ethylen- und Propylen-Copolymeren (SEP), cycloaliphatischen Copolymeren oder Mischungen dieser Elastomere oder anderen durch wässrige Dispersion aufgebrachten Elastomeren, wie Kautschuk-Elastomeren, Acrylelastomeren, einschließlich solcher, die chemisch oder durch UV-Strahlung vernetzt sind, oder deren Mischung sowie die Mischung von Elastomeren mit Polyethylenen oder Polypropylenen enthält, hergestellt wird.

10. Verfahren zum Herstellen der Folie nach den Ansprüchen 7 bis 9, **dadurch gekennzeichnet, dass** die Antihaftschicht eines der Polymere wie HDPE, LDPE, LLDPE, PP, PA, Polyester sowie deren Copolymere, einschließlich Blockcopolymeren oder deren Mischungen oder Fluorsubstanzen, enthält, die Oberflächenreibung verringern.

## Revendications

1. Film de protection de surface comprenant de 50 à 99 % de copolymères d'éthylène, d'un copolymère de propylène ou de leur mélange, comprenant des couches dans lesquelles au moins une couche est un bloc de 10 à 100 couches fines et ce bloc constitue de 15 % à 80 % de l'épaisseur totale du film, et l'épaisseur de chacune des micro-couches du bloc est comprise entre 0,05 et 1,00 µm et les couches fines sont fabriquées dans le même plastique ou de 2 types de plastique différents placés en alternance à l'endroit où le plastique formant ledit bloc de couches fines est le polyéthylène à haute densité (HDPE) ou le polyéthylène à faible densité (LDPE) ou le polyéthylène à faible densité linéaire (LLDPE) ou le polyéthylène à ultra faible densité (ULDPE) ou le polypropylène (PP) ou le polyamide (PA) ou des copolymères comprenant des copolymères séquencés ou des mélanges de ces matières premières et une des couches extérieures du film est une couche adhésive de 1 à 20 µm d'épaisseur et la couche extérieure opposée du film est une couche anti-adhésive de 1 à 20 µm d'épaisseur.

2. Film selon la revendication 1 **,caractérisé en ce qu'**il contient 2 blocs de micro-couches séparés par au moins une couche de 1 à 50 µm d'épaisseur.

3. Film selon l'une des revendications précédentes, **caractérisé en ce que** la couche adhésive contient un des élastomères thermoplastiques tels que les copolymères acryliques, les copolymères de polypropylène, les copolymères éthylène-vinyle (EVA), les copolymères séquencés de styrène et d'isoprène (SIS) ainsi que les copolymères hydrogénés (SEPS), les copolymères de styrène et de butadiène (SBS) ainsi que les copolymères de styrène, d'éthylène, de butène et de styrène (SEBS) hydrogénés, les copolymères de styrène, d'éthylène et de propylène (SEP), les copolymères cycloaliphatiques ou les mélanges de ces élastomères ou d'autres élastomères appliqués par dispersion aqueuse, tels que les élastomères de caoutchouc, les élastomères d'acrylique y compris ceux réticulés chimiquement ou par rayonnement UV ou leur mélange ainsi que le mélange d'élastomères avec des polyéthylènes ou des polypropylènes.

4. Film selon l'une des revendications précédentes, **caractérisé en ce que** la couche anti-adhésive contient l'un des polymères tels que HDPE, LDPE, LLDPE, PP, PA, des polyesters ainsi que leurs copolymères, y compris des copolymères séquencés ou leurs mélanges ou des substances fluorées réduisant la friction de surface.

5. Film selon l'une des revendications précédentes, **caractérisé par** la présence, entre le bloc de couches fines et la couche extérieure, d'au moins une couche intermédiaire de 1 à 30 µm d'épaisseur.

6. Film selon l'une des revendications précédentes, **caractérisé en ce que** la couche située directement sous la couche adhésive contient des copolymères éthylène-acétate de vinyle (EVA), des copolymères éthylène-acrylate de méthyle (EMA), des copolymères éthylène-acrylate d'éthyle (EEA), des copolymères éthylène-acrylate de butyle (EBA) et d'autres copolymères augmentant la polarité de surface.

7. Procédé de production d'un film de protection de surface, dans lequel le film est produit sous une forme multicouche à partir du mélange de polymères contenant de 50 à 99 % de copolymères d'éthylène, de copolymères de propylène ou de leur mélange, avec au moins un bloc de couches fines, dans lequel la structure des couches est formée par extrusion, à partir du plastique plastifié, d'un bloc de micro-couches comprenant de 10 à 100 micro-couches, formé de 2 types différents de matières plastiques extrudés en alternance et dans lequel ces plastiques constituent l'une des matières premières suivantes : polyéthylène à haute densité (HDPE), polyéthylène à basse densité (LDPE), polyéthylène à faible densité linéaire (LLDPE), polyéthylène à ultra-faible densité (ULDPE), polypropylène (PP), polyamide (PA) ou de copolymères, y compris des copolymères séquencés ou des mélanges de ces matières premières, et le bloc de couches minces représentant de 15 à 80 % de l'épaisseur du film, et chacune des micro-couches a une épaisseur de 0,05 à 1 µm et, en outre, la surface du bloc est recouverte d'une couche adhésive externe de 1 à 20 µm d'épaisseur, tandis que la surface opposée est recouverte d'une couche anti-adhésive de 1 à 20 µm d'épaisseur.

8. Procédé de production du film selon la revendication 7, **caractérisé en ce que** le film est produit à partir de 2 blocs de micro-couches, séparées par une couche centrale de 1 à 50 µm d'épaisseur.

9. Procédé de production du film selon les revendications 7 à 8, **caractérisé en ce que** la couche adhésive est produite à partir d'élastomères thermoplastiques tels que les copolymères acryliques, les copolymères de polypropylène ; les copolymères éthylène-vinyle (EVA) ; les copolymères séquencés de styrène et d'isoprène (SIS) ainsi que les copolymères hydrogénés (SEPS); les copolymères de styrène et de butadiène (SBS) ainsi que les copolymères de styrène, d'éthylène, de butène et de styrène (SEBS) hydrogénés, les copolymères de styrène, d'éthylène et de propylène (SEP), les copolymères cycloaliphatiques ou les mélanges de ces élastomères ou d'élastomères appliqués par dispersion aqueuse, tels que les élastomères de caoutchouc, les élastomères acryliques y compris ceux réticulés chimiquement ou par rayonnement UV ou leur mélange, ainsi que le mélange d'élastomères avec des polyéthylènes ou des polypropylènes.

10. Procédé de production du film selon les revendications 7 à 9, **caractérisé en ce que** la couche anti-adhésive contient l'un des polymères tels que HDPE, LDPE, LLDPE, PP, PA, des polyesters ainsi que leurs copolymères, y compris des copolymères séquencés ou leurs mélanges ou des substances fluorées réduisant la friction de surface.
